# FASCICULE DE BREVET EUROPEEN

(11) **EP 0 622 610 B1**
(45) Date de publication et mention de la délivrance du brevet: **21.01.1998**
(21) Numéro de dépôt: 94470011.1
(22) Date de dépôt: 08.04.1994
(51) Int. Cl.: G01B 15/04

(54) **Procédé et dispositif d'étalonnage pour un ensemble de mesure du profil transversal d'épaisseur d'un produit plat**
Verfahren und Anordnung zum Eichen der Dickenmessanordnung des Querprofils eines flächigen Gutes
Calibration method and apparatus for flat product transversal profile thickness measuring unit

(30) Priorité: 26.04.1993 FR 9305053
(43) Date de publication de la demande: 02.11.1994
(73) Titulaire: SOLLAC S.A., 92800 Puteaux (FR)
(72) Inventeur: Campas, Jean-Jacques, F-57530 Colligny (FR)
(74) Mandataire: Ventavoli, Roger

(56) Documents cités:
- FR-A- 2 578 643
- PATENT ABSTRACTS OF JAPAN vol. 8, no. 157 (P-288) (1594) 20 Juillet 1984 & JP-A-59 054 913 (SUMITOMO KINZOKU KOGYO KK) 29 Mars 1984

## Description

La présente invention concerne un procédé et un dispositif d'étalonnage pour un ensemble de mesure du profil transversal d'épaisseur d'un produit plat, tel qu'une tôle métallique.

Un ensemble de mesure de ce type, décrit par exemple dans le document FR-A-2578643, comporte une source de rayonnement, par exemple de rayons X, située d'un côté du produit et au moins une rangée de détecteurs élémentaires juxtaposés, qui s'étendent selon la direction du profil à mesurer, de l'autre côté du produit.

La mesure est basée sur l'absorption du rayonnement par le produit, qui varie notamment en fonction de l'épaisseur de celui-ci. Chaque détecteur élémentaire reçoit la part du flux émis par la source et non absorbé par le produit. La fonction reliant le signal fourni par chaque détecteur en réponse au flux qu'il reçoit est une loi exponentielle dont l'un des paramètres est la nature du matériau constitutif du produit.

Il est donc nécessaire d'étalonner l'ensemble de mesure.

Il est connu de calibrer des systèmes de mesure d'épaisseur fonctionnant sur le principe de l'absorption d'un rayonnement en intercalant dans le faisceau entre source et détecteur, successivement des cales d'épaisseur et de composition connues, et en modélisant la réponse par un polynôme d'ordre n (généralement du 5ème ordre). Les cales utilisées doivent avoir une épaisseur connue avec précision et une très bonne régularité d'épaisseur sur la surface traversée par le faisceau.

Dans les systèmes de mesure d'épaisseur ponctuels, utilisant une source et un seul détecteur, on utilise des magasins à cales placés juste contre la source, au plus près de la sortie du faisceau, là où son diamètre est minimum. Des bras permettent de placer individuellement ou simultanément des cales dans le faisceau. L'épaisseur de ces cales répond à une progression binaire ou BCD afin de couvrir la gamme de mesure en en minimisant le nombre. Les cales font environ 15 mm de diamètre.

On trouve un système de ce type par exemple dans le document JP-A 59-054 913, qui décrit un calibreur rapide comportant une rampe à gradins calibrés en épaisseur, montée en porte-à-faux sur un vérin vertical porté par un chariot mobile. Les gradins viennent successivement les uns après les autres se positionner sur la ligne de laminage juste au dessus de la source émettrice au moyen de petits déplacements discrets du chariot associés à un mouvement de montée-descente du vérin.

Dans le cas d'un ensemble de mesures du profil d'épaisseur comprenant une pluralité de détecteurs élémentaires, chacun de ces détecteurs doit être étalonné. Or de tels ensembles peuvent comporter plusieurs centaines de détecteurs alignés, s'étendant sur plusieurs centaines de millimètres.

Compte tenu que l'étalonnage d'un détecteur nécessite au moins dix points, c'est-à-dire l'utilisation de cales différentes créant au moins dix épaisseurs, on comprend aisément que l'étalonnage successif de chacun des détecteurs élémentaires, même à l'aide d'un calibreur rapide du type précité, est pratiquement impossible car il conduirait à effectuer des milliers de mesures, et donc de manipulations des cales, pour l'étalonnage complet du système.

Une autre possibilité consiste à utiliser des cales étalon permettant l'étalonnage simultané de tous les détecteurs. Si ces cales sont placées juste au-dessus de la rangée de détecteurs, la zone de mesure est très allongée du fait de la grande longueur de cette rangée. Lorsque l'on utilise une source fixe émettant le rayonnement selon un faisceau élargi en éventail pour couvrir tous les détecteurs, il serait possible de placer les cales étalons à proximité de la source, où la largeur du faisceau est moindre. Mais pratiquement les cales ne peuvent être placées au plus près de la source que dans une zone ou la largeur du faisceau atteint quand même près de 100 mm. Une telle méthode implique donc d'utiliser des cales de grandes longueurs, dont la régularité d'épaisseur ne peut être assurée sur toute leur longueur, ce qui fausse l'étalonnage.

Le problème est donc de réduire le temps nécessaire à un étalonnage précis et rapide d'un ensemble de mesure du profil d'épaisseur d'un produit comportant de nombreux détecteurs juxtaposés selon une rangée allongée, sans avoir à utiliser des cales d'étalonnage dont les grandes dimensions se révèlent incompatibles avec la précision requise pour leur épaisseur.

L'invention a donc pour objet un procédé d'étalonnage d'un ensemble de mesure du profil transversal d'épaisseur d'un produit plat, comportant une source de rayonnement placée d'un côté du produit et une rangée de détecteurs élémentaires juxtaposés et alignés selon la direction du profil à mesurer, placés de l'autre côté du produit pour détecter la part de rayonnement non absorbée par le produit, procédé du type consistant à intercaler entre la source et les détecteurs des cales étalons et à déterminer en fonction des caractéristiques de ces cales la réponse desdits détecteurs, ce procédé permettant un étalonnage rapide et précis de tous les détecteurs.

Selon l'invention, ce procédé est caractérisé en ce qu'on déplace, entre la source et les détecteurs, selon ladite direction, un ensemble de différentes cales unitaires de petites dimensions alignées selon ladite direction, chaque cale ayant des caractéristiques spécifiques prédéterminées, notamment relatives à son matériau et à son épaisseur, ce déplacement étant réalisé de manière qu'au cours de celui-ci, chaque cale intercepte le rayonnement perçu par chaque détecteur, et, au cours du déplacement, on effectue plusieurs lectures des signaux émis par les détecteurs de manière à obtenir, pour chaque détecteur, un ensemble de valeurs de signaux représentatives de l'intensité du rayonnement absorbé par chaque cale, la vitesse de déplacement de l'ensemble de cale et la fréquence des lectures étant réglées de manière que, pour chaque détecteur, il y a au moins une lecture des signaux relatifs à chaque cale et on établit à partir desdites valeurs la courbe d'étalonnage de chaque détecteur.

Ainsi, l'étalonnage d'un ensemble de mesure du profil transversal d'épaisseur d'un produit plat, comportant une rangée de nombreux détecteurs unitaires, peut être réalisé rapidement par un seul passage de l'ensemble de cales entre la source et les détecteurs, et avec une grande précision car chaque cale est de petite dimension et peut donc avoir une épaisseur bien maîtrisée et constante sur toute sa surface.

Préférentiellement, la vitesse de déplacement de l'ensemble de cales et la fréquence des lectures sont déterminées de manière que pour chaque détecteur, il y ait plusieurs lectures des signaux relatifs à une même cale. Ainsi, on accroît la précision globale de l'étalonnage, en disposant, pour chaque capteur, des résultats de plusieurs mesures effectuées sur une même cale, donc pour une même épaisseur, mais en plusieurs points de celle-ci.

Par ailleurs, la position de l'ensemble de cales par rapport à la rangée de détecteurs est préférentiellement déterminée, au moment de chaque lecture, à partir des signaux lus sur l'ensemble des détecteurs. Bien que la position de l'ensemble des cales pourrait être déterminée par mesure directe de son déplacement, ou à partir de la mesure de sa vitesse de déplacement et du temps écoulé depuis le début du déplacement, la disposition précédente garantit une détermination précise de la localisation des cales par rapport aux détecteurs au moment de chaque lecture, permettant ainsi de relier directement une valeur du signal fourni par un détecteur à la cale correspondante. Ainsi le déplacement des cales peut être réalisé sans préoccupations de synchronisme avec les lectures et de recopie de position.

En particulier, la position de l'ensemble de cale est déterminée par la position, dans la rangée de détecteurs, de détecteurs voisins qui, lors d'une lecture, fournissent des signaux fortement différenciés résultant d'une transition brusque de l'absorption du rayonnement entre un élément défini de l'ensemble de cale ou d'un support de cet ensemble, et le voisinage de cet élément. Par exemple ladite transition brusque est réalisée par le bord libre d'un cadre de support des cales qui absorbe fortement le rayonnement alors que, au delà de ce bord, le rayonnement parvient intégralement aux détecteurs.

Préférentiellement encore, on ne retient, lors de chaque lecture, que les signaux qui parviennent aux détecteurs situés, lors de cette lecture, en regard avec la partie centrale des cales. On supprime ainsi systématiquement toutes les mesures qui correspondraient à une zone de transition entre deux cales. Les mesures réalisées par les détecteurs situés en regard du bord des cales, dans la direction de la partie de rayonnement concerné, ne sont pas utilisées car entachées d'erreur. La localisation des détecteurs concernés peut être facilement déterminée à partir de la localisation de l'ensemble de cales par rapport à la rangée de détecteurs et des dimensions de celles-ci et de leur position dans l'ensemble de cales.

L'invention a aussi pour objet un dispositif d'étalonnage d'un ensemble de mesure du profil d'épaisseur de produits plats qui comporte une source de rayonnement et une rangée de détecteurs élémentaires juxtaposés et alignés selon la direction du profil à mesurer, la source et la rangée de détecteurs étant placées de part et d'autre d'une zone de passage dudit produit, le dispositif étant caractérisé en ce qu'il comporte un ensemble de cales différentes alignées selon ladite direction, un chariot de support des cales, mobile selon cette direction pour déplacer l'ensemble des cales dans la zone de passage de manière que chaque cale puisse intercepter le rayonnement émis par la source en direction de chaque détecteur, et des moyens pour effectuer, au cours du déplacement du chariot, plusieurs lectures des signaux émis par les détecteurs de manière à obtenir, pour chaque détecteur, un ensemble de valeurs des signaux représentatives de l'intensité du rayonnement absorbé par chaque cale, et des moyens pour déterminer, à partir de ces valeurs la courbe d'étalonnage de chaque capteur.

Préférentiellement, les cales sont supportées par le chariot par l'intermédiaire d'un cadre sur lequel les cales sont fixées de manière jointive, le cadre ayant une épaisseur suffisante de manière que le bord de ce cadre puisse servir de référence pour la détermination de la position des cales par rapport aux détecteurs, en créant une variation brusque de l'intensité du rayonnement parvenant respectivement aux détecteurs situés en regard de ce cadre, et aux détecteurs situés au delà du bord du cadre, et auquels le rayonnement parvient intégralement.

D'autres caractéristiques et avantages apparaîtront dans la description qui va être faite à titre d'exemple d'un dispositif et d'un procédé d'étalonnage d'un ensemble de mesure en continu du profil d'épaisseur en rive de bandes en acier.

On se reportera aux dessins annexés dans lesquels :
- la figure 1 est une vue schématique de l'ensemble de mesure de profil d'épaisseur ;
- la figure 2 est une vue de côté de l'ensemble de mesure de la figure 1 ;
- la figure 3 est une vue des moyens mécaniques du dispositif selon l'invention ;
- la figure 4 est une vue de dessus de l'ensemble de cales d'étalonnage et de son support ;
- la figure 5 est une représentation graphique des signaux fournis par l'ensemble de détecteurs lors d'une lecture ;
- la figure 6 montre le principe de sélection des détecteurs dont les signaux sont pris en compte lors de chaque lecteur ;
- la figure 7 montre la structure des tableaux d'acquisition des données correspondant aux signaux fournis par les détecteurs.

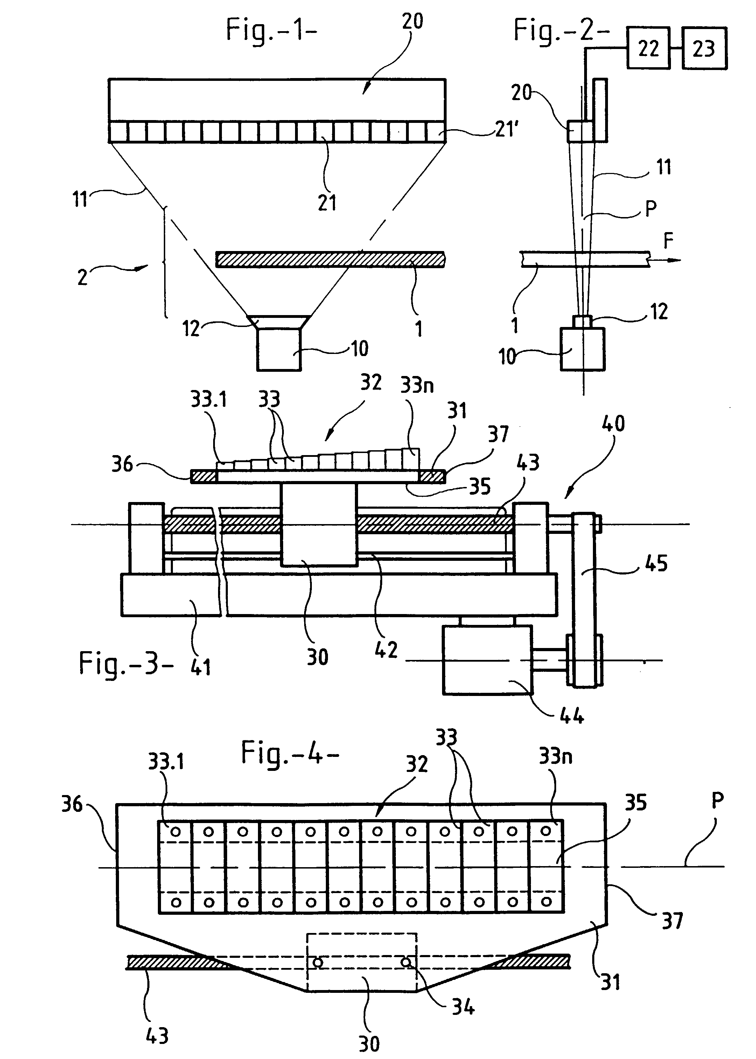

L'ensemble de mesure du profil d'épaisseur représenté aux figures 1 et 2 comporte une source 10 de rayonnements ionisants aptes à traverser un produit plat tel que la bande 1 en étant partiellement absorbé par celle-ci, l'absorption variant en fonction de son épaisseur, et une rangée 20 de détecteurs 21 élémentaires juxtaposés placée de l'autre côté de la bande 1. La mesure du profil est réalisé en continu lors du défilement de la bande selon la flèche F.

La source 10 est pourvue d'un collimateur 12 qui fournit un faisceau 11 plat en éventail, dans un plan perpendiculaire à la flèche F, et qui s'étend donc selon la direction générale de la rangée 20 de détecteurs.

Un tel ensemble de mesure est décrit dans le document FR-A-2578643 déjà cité, et auquel on pourra se reporter pour plus de détails sur son utilisation pour la mesure du profil d'épaisseur. Il est seulement rappelé ici que le flux de rayonnement émis par la source en direction d'un détecteur élémentaire 21 est partiellement absorbé par la bande 1. Le flux non absorbé et parvenant au détecteur 21 est donc fonction de la composition de la bande et surtout, pour ce qui nous intéresse ici, de son épaisseur. Le signal émis par le détecteur 21 en réponse à ce flux permet donc de déterminer, après étalonnage, l'épaisseur de la bande dans la zone de celle-ci traversée par le rayonnement correspondant. La combinaison des signaux fournis par l'ensemble des détecteurs permet donc d'établir un profil d'épaisseur de la zone de la bande exposée au rayonnement.

A titre d'exemple dans un tel ensemble, le faisceau collimaté a en sortie de source une largeur de 60 à 80 mm, la rangée de détecteurs comporte 384 détecteurs élémentaires et s'étend sur 600 mm. Le signal global fourni par la rangée de détecteur est représentatif du profil mesuré est donc constitué par 384 pixels, chaque pixel correspondant au signal fournit par un détecteur élémentaire.

Le dispositif d'étalonnage comporte (figure 3) un chariot mobile 30 qui porte un cadre 31 sur lequel est fixé un ensemble 32 de cales 33 de différentes épaisseurs, et un mécanisme 40 d'entraînement en translation du chariot. Ce mécanisme d'entraînement comporte un châssis 41, une glissière 42 de guidage du chariot et une vis 43 d'entraînement entraînée en rotation par un moteur 44 et une courroie 45.

Lors de l'étalonnage, ce dispositif est placé dans la zone 2 de passage du produit, de telle sorte que l'ensemble de cale 33 s'étende dans le plan P du faisceau parallèlement à la direction générale de la rangée de détecteurs, et qu'il puisse être déplacé entièrement sur toute la largeur du faisceau.

Comme on le voit sur la figure 4, le cadre 31 est fixé sur le chariot 30, par exemple par des vis 34, de manière que le mécanisme d'entraînement 40 du chariot soit décalé par rapport au plan P.

Dans le cas de l'exemple cité ci-dessus le cadre a une longueur d'environ 150 mm, inférieure à la largeur du faisceau au niveau de la bande 1, niveau auquel il est placé pour l'étalonnage.

Comme on le verra par la suite, ceci permet de déterminer la position de l'ensemble de cales par rapport aux détecteurs à partir de la détection des bords du cadre.

L'ensemble 32 de cales est constitué par plusieurs cales 33, par exemple douze, de faible largeur, par exemple de 10 à 20 mm, disposés jointivement et alignés parallèlement à la direction de la rangée 20 de détecteurs. Les cales sont fixées sur le cadre 31 de manière à couvrir entièrement la zone centrale évidée 35 du cadre.

Le dispositif comporte également des moyens 22 de traitement des signaux fournis par les détecteurs lors du déplacement du chariot, ces moyens étant généralement ceux utilisés lors de la mise en oeuvre de l'ensemble pour la mesure du profil, et des moyens de calcul 23 pour déterminer la courbe d'étalonnage des capteurs.

On va maintenant décrire la mise en oeuvre du dispositif pour un étalonnage de l'ensemble de mesure de profil.

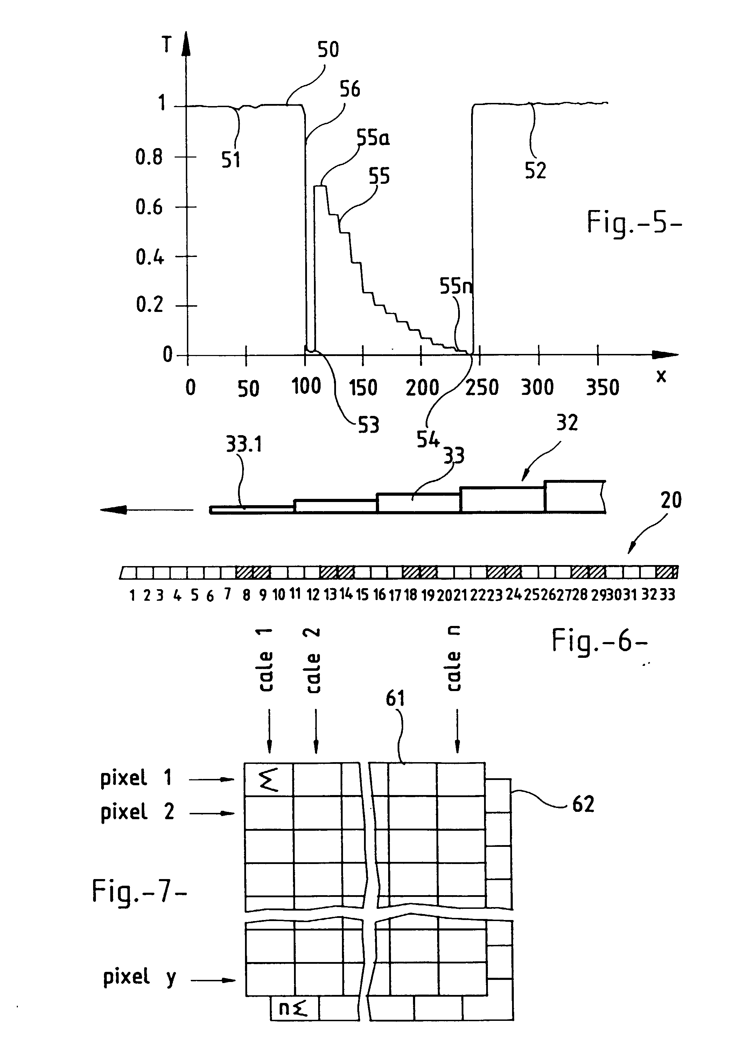

Au début de l'étalonnage, le chariot 30 est situé à l'une des extrémités de sa trajectoire, par exemple du côté du moteur 44, de sorte que le cadre 31 n'intercepte pas le faisceau 11 du rayonnement. Puis le déplacement est commandé. Lorsque le bord 36 du cadre pénètre dans le faisceau, le rayonnement dirigé vers le premier détecteur 21' de la rangée 20 de détecteurs est fortement absorbé par le cadre et le flux parvenant à ce détecteur 21' est minime, alors que le rayonnement parvient intégralement au détecteur voisin. Le signal 50 correspondant fourni par l'ensemble des détecteurs comporte donc un décrochement brusque, tel que celui représenté en 56 sur la figure 5.

Lorsque le déplacement se poursuit, le même décrochement apparaîtra successivement pour les détecteurs suivants. C'est cette variation brusque du signal qui permet de définir la localisation du cadre 31, et donc des cales 33, lors de chaque lecture des signaux fournis par l'ensemble de détecteurs, sans qu'il soit nécessaire de synchroniser le déplacement du chariot avec les lecteurs.

La vitesse de déplacement est toutefois déterminée de façon que chaque détecteur 21 puisse faire plusieurs lectures, par exemple de 4 à 8, sur chacune des cales 33.

Comme indiqué ci-dessus, à chaque lecture, la position du chariot et donc des cales, est déterminée par analyse de la forme du signal global 50 fourni par l'ensemble des détecteurs (figure 5). Le cadre 31 de forte épaisseur crée un contraste important afin de sécuriser ce traitement. Toutefois, la référence de position pourrait être déterminée par une autre transition brusque du taux de transmission du flux, par exemple provoquée par le bord de la cale la plus épaisse, ou la transition entre la cale la plus mince et le cadre nettement plus épais que cette dernière.

Le dessin de la figure 5 représente le signal 50 fourni par l'ensemble de détecteurs, lors d'une lecture, lorsque le cadre et l'ensemble de cales se trouve entièrement dans le champ du faisceau 11. La courbe 50 représente le taux T de transmission du flux reçu par les détecteurs en fonction de l'abscisse x des détecteurs.

Les zones 51 et 52 correspondent aux détecteurs qui reçoivent intégralement le flux du rayonnement qui passe de part et d'autre du cadre 31. Les zones 53 et 54 correspondant respectivement aux détecteurs situés, dans la direction du rayonnement, sous le cadre qui absorbe pratiquement totalement le flux, et la zone centrale 55 correspond aux détecteurs qui reçoivent le rayonnement traversant les cales. Cette zone 55 a un profil en "marches d'escalier" dû aux différentes épaisseurs des cales 33, la "marche" 55a correspondant à la cale 33.1 la moins épaisse et la marche 55n correspondant à la cale 33n la plus épaisse.

Dans les zones de transitions entre deux marches consécutives, le signal est moins bien défini pour les détecteurs concernés.

Pour éviter de prendre en compte ultérieurement dans l'établissement des courbes d'étalonnage les signaux émis par les détecteurs se trouvant en regard des bords des cales ou de l'interface entre deux cales, seuls les signaux émis par les détecteurs correspondant à la partie centrale de chaque cale sont pris en considération lors de chaque lecture.

Ainsi à chaque lecture des détecteurs, on sélectionne quelques détecteurs élémentaires pour chaque cale, en ne prenant pas en compte la valeur du signal émis par les autres détecteurs qui reçoivent un flux de rayonnement ayant traversé les cales à proximité de leurs bords. C'est ce qui est représenté schématiquement à la figure 6, où les détecteurs élémentaires dont le signal est pris en compte sont représentés noircis. La sélection de ces détecteurs est effectuée à partir de la détermination de la position de l'ensemble de cales, comme indiqué précédemment, et de la mesure effectuée préalablement de la distance entre les bords de chaque cale et la référence de position du chariot, c'est-à-dire ici le bord 36 du cadre 31.

On comprendra aisément que, sous la condition que la vitesse de déplacement du chariot soit suffisamment lente par rapport à la cadence des lectures des détecteurs, chaque détecteur élémentaire aura, à la fin du cycle d'étalonnage, effectué plusieurs mesures sur chacune des cales.

Par ailleurs, pour déterminer la position des cales par rapport aux détecteurs pendant tout le déplacement du chariot, il est prévu de remplacer, à un certain moment, par exemple à mi-parcours, la référence de positionnement constituée par le bord avant 36 du cadre, par le bord arrière 37 du cadre, de manière à conserver une référence lorsque, en fin de parcours, le bord avant se trouve en dehors du faisceau 11.

Le traitement des signaux est effectué dans le calculateur 23 de la manière suivante, schématisée par le dessin de la figure 7. Les valeurs des signaux émis par chaque détecteur 21 sont placées dans deux tableaux 61, 62 ayant pour dimensions le nombre "Y" de détecteurs et le nombre "n" de cales. Par exemple pour une rangée de détecteurs de 384 détecteurs élémentaires, ou pixels, et un étalonnage effectué avec 12 cales, les tableaux auront 384 lignes et 12 colonnes.

Au début de l'opération, les tableaux sont mis à zéro. Un tableau 61 reçoit les sommations des valeurs des signaux pris en considération, et l'autre tableau 62 reçoit en correspondance, le nombre des sommations, c'est-à-dire le nombre desdites valeurs prises en considération.

A chaque lecture de l'ensemble des détecteurs, et pour chaque pixel pris en considération, la valeur de celui-ci est ajoutée dans la case correspondante, définie par le numéro du pixel et celui de la cale ayant produit ladite valeur, du tableau 61, et la case de mêmes coordonnées du tableau 62 est incrémentée, totalisant le nombre des valeurs introduites dans la case correspondante du tableau 61.

Ainsi à la fin de cycle d'étalonnage, toutes les cases du tableau 61 contiennent des valeurs totalisées, et les moyennes de chacune des cases sont calculées à l'aide des nombres de valeurs du tableau 62.

Ensuite pour chacune des lignes, correspondant à un même détecteur, un polynôme représentatif de la courbe d'étalonnage est calculé à l'aide des valeurs moyennes de chacune des cases, relatives à chacune des cales.

L'invention n'est pas limitée au dispositif décrit ci-dessus à titre d'exemple. On pourra par exemple utiliser d'autres variantes du système d'entraînement du chariot, telles ques courroie ou crémaillère ; le moteur peut être un moteur pas à pas, ou à courant continu.

La détection de position de l'ensemble de cale peut aussi être réalisée par traitement du signal en identifiant la position des cales par un masque géométrique déterminé préalablement.

## Revendications

1. Procédé d'étalonnage d'un ensemble de mesure du profil transversal d'épaisseur d'un produit plat, comportant une source (10) de rayonnement placée d'un côté du produit (1) et une rangée (20) de détecteurs élémentaires (21) juxtaposés et alignés selon la direction (P) du profil à mesurer, placés de l'autre côté du produit, pour détecter la part du rayonnement non absorbée par le produit, procédé du type consistant à intercaler entre la source (10) et les détecteurs (21) des cales étalons (33) et à déterminer en fonction des caractéristiques de ces cales la réponse desdits détecteurs,
caractérisé en ce que :
- on déplace, entre la source et les détecteurs, selon ladite direction (P), un ensemble (32) de cales unitaires (33) différentes, de petites dimensions, alignées selon ladite direction, chaque cale ayant des caractéristiques spécifiques prédéterminées, ce déplacement étant réalisé de manière que, au cours de celui-ci, chaque cale intercepte le rayonnement perçu par chaque détecteur, et
- au cours du déplacement, on effectue plusieurs lectures des signaux (50) émis par les détecteurs de manière à obtenir, pour chaque détecteur, un ensemble de valeurs des signaux représentatives de l'intensité du rayonnement absorbé par chaque cale, la vitesse de déplacement de l'ensemble de cale et la fréquence des lectures étant réglées de manière que, pour chaque détecteur, il y a au moins une lecture des signaux relatifs à chaque cale, et
- on établit à partir desdites valeurs la courbe d'étalonnage de chaque détecteur.

2. Procédé selon la revendication 1, caractérisé en ce que, pour chaque détecteur, on effectue plusieurs lectures des signaux relatifs à une même cale.

3. Procédé selon la revendication 1, caractérisé en ce que la position de l'ensemble (32) de cales par rapport à la rangée de détecteurs est déterminée, au moment de chaque lecture, à partir des signaux lus (50) sur l'ensemble des détecteurs.

4. Procédé selon la revendication 3, caractérisé en ce que la position de l'ensemble de cale est déterminée par la position, dans la rangée de détecteurs, de détecteurs voisins qui, lors d'une lecture, fournissent des signaux fortement différenciés résultant d'une transition brusque de l'absorption du rayonnement entre un élément pré-défini de l'ensemble de cale ou d'un support (31) de cet ensemble, et le voisinage de cet élément.

5. Procédé selon la revendication 4, caractérisé en ce ladite transition brusque est réalisée par le bord libre (36, 37) d'un cadre (31) de support des cales (32) qui absorbe fortement le rayonnement alors que, au delà de ce bord, le rayonnement parvient intégralement aux détecteurs.

6. Procédé selon l'une quelconque des revendications précédentes, caractérisé en ce que lors de chaque lecture, on ne retient que les signaux qui parviennent aux détecteurs situés, lors de cette lecture, en regard avec la partie centrale des cales.

7. Dispositif d'étalonnage d'un ensemble de mesure du profil d'épaisseur de produits plats qui comporte une source (10) de rayonnement et une rangée (20) de détecteurs élémentaires (21) juxtaposés et alignés selon la direction (P) du profil à mesurer, la source et la rangée de détecteurs étant placées de part et d'autre d'une zone (2) de passage dudit produit, caractérisé en ce qu'il comporte un ensemble (32) de cales (33) ayant des caractéristiques différentes, alignées selon ladite direction, un chariot (30) de support des cales mobile selon cette direction pour déplacer l'ensemble des cales dans la zone de passage de manière que chaque cale puisse intercepter le rayonnement émis par la source en direction de chaque détecteur, et des moyens (22) pour effectuer au cours du déplacement du chariot, plusieurs lectures des signaux émis par les détecteurs de manière à obtenir, pour chaque détecteur, un ensemble de valeurs des signaux représentatives de l'intensité du rayonnement absorbé par chaque cale, et des moyens (23) pour déterminer, à partir de ces valeurs, la courbe d'étalonnage de chaque capteur.

8. Dispositif selon la revendication 7, caractérisé en ce que les cales sont supportées par le chariot par l'intermédiaire d'un cadre (31) sur lequel les cales sont fixées de manière jointive.

9. Dispositif selon la revendication 8, caractérisé en ce que le bord (36, 37) du cadre (31) sert de référence pour la détermination de la position des cales par rapport aux détecteurs.

## Patentansprüche

1. Verfahren zum Eichen einer Anordnung zur Messung des Dickenquerprofils eines Flacherzeugnisses, die eine Strahlungsquelle (10), die auf einer Seite des Erzeugnisses (1) angeordnet ist, und eine Reihe (20) von nebeneinanderliegenden Elementardetektoren (21) umfaßt, die entlang der Richtung (P) des zu messenden Profils ausgerichtet und auf der anderen Seite des Erzeugnisses angeordnet sind, um den Teil der Strahlung zu erfassen, der nicht von dem Produkt absorbiert wird, wobei das Verfahren darin besteht, zwischen die Quelle (10) und die Detektoren (21) keilförmige Eichkörper (33) einzuschieben und in Abhängigkeit von den Eigenschaften dieser Körper das Verhalten dieser Detektoren zu ermitteln,
dadurch gekennzeichnet, daß:
- man zwischen der Quelle und den Detektoren entlang der Richtung (P) eine Gruppe (32) von verschiedenen Einheitskörpern (33) kleiner Abmessungen verschiebt, die entlang dieser Richtung ausgerichtet sind, wobei jeder Körper spezifische vorbestimmte Eigenschaften aufweist, wobei diese Verschiebung derart erfolgt, daß im Laufe derselben jeder Körper die von jedem Detektor wahrgenommene Strahlung teilweise zuruckhält, und
- man im Laufe der Verschiebung mehrere Ablesungen der von den Detektoren gesendeten Signale (50) durchführt, um für jeden Detektor einen Satz von Werten der Signale, welche die Intensität der von jedem Körper absorbierten Strahlung repräsentieren, zu erhalten, wobei die Geschwindigkeit der Verschiebung der Körpergruppe und die Frequenz der Ablesungen so eingestellt werden, daß für jeden Detektor pro Körper mindestens eine Ablesung der betreffenden Signale erfolgt, und
- man anhand dieser Werte die Eichkurve jedes Detektors ermittelt.

2. Verfahren nach Anspruch 1, dadurch gekennzeichnet, daß man für jeden Detektor mehrere Ablesungen der einen selben Körper betreffenden Signale durchführt.

3. Verfahren nach Anspruch 1, dadurch gekennzeichnet, daß zum Zeitpunkt jeder Ablesung anhand der an der Detektorgruppe abgelesenen Signale (50) die Position der Körpergruppe (32) in bezug auf die Detektorreihe bestimmt wird.

4. Verfahren nach Anspruch 3, dadurch gekennzeichnet, daß die Position der Körpergruppe durch die Position von benachbarten Detektoren in der Detektorreihe bestimmt wird, die bei einer Ablesung stark differenzierte Signale liefern, welche aus einer plötzlichen Änderung der Absorption der Strahlung zwischen einem vorbestimmten Element der Körpergruppe oder einer Haltevorrichtung (31) dieser Gruppe und der Umgebung dieses Elements resultieren.

5. Verfahren nach Anspruch 4, dadurch gekennzeichnet, daß die plötzliche Änderung durch die freie Kante (36, 37) eines Halterahmens (31) der Körper (32) erzeugt wird, der die Strahlung stark absorbiert, während jenseits dieser Kante die Strahlung ungemindert zu den Detektoren gelangt.

6. Verfahren nach einem der vorhergehenden Ansprüchen, dadurch gekennzeichnet, daß man bei jeder Ablesung nur die Signale aufnimmt, die zu den Detektoren gelangen, welche bei dieser Ablesung dem mittleren Teil der Körper gegenüberliegen.

7. Vorrichtung zum Eichen einer Anordnung zur Messung des Dickenprofils von Flacherzeugnissen, die eine Strahlungsquelle (10) und eine Reihe (20) von nebeneinanderliegenden Elementardetektoren (21) umfaßt, die entlang der Richtung (P) des zu messenden Profils ausgerichtet sind, wobei sich die Quelle und die Detektorreihe auf beiden Seiten einer Durchlauf zone (2) des Erzeugnisses befinden, dadurch gekennzeichnet, daß sie eine Gruppe (32) von keilförmigen Körpern (33) unterschiedlicher Eigenschaften aufweist, die entlang der genannten Richtung ausgerichtet sind, einen die Körper tragenden Schlitten (30), der entlang dieser Richtung beweglich ist, um die Gruppe der Körper in der Durchlaufzone derart zu verschieben, daß jeder Körper die von der Quelle in Richtung jedes Detektors ausgesendete Strahlung zurückhalten kann, Mittel (22), um im Laufe der Verschiebung des Schlittens mehrere Ablesungen der von den Detektoren gesendeten Signale durchzuführen, um für jeden Detektor einen Satz von Werten der Signale, welche die Intensität der von jedem Körper absorbierten Strahlung repräsentieren, zu erhalten, sowie Mittel (23) umfaßt, um anhand dieser Werte die Eichkurve jedes Meßfühlers zu ermitteln.

8. Vorrichtung nach Anspruch 7, dadurch gekennzeichnet, daß die Körper von dem Schlitten mittels eines Rahmens (31) getragen werden, auf dem die Körper in aneinanderstoßender Weise befestigt sind.

9. Vorrichtung nach Anspruch 8, dadurch gekennzeichnet, daß die Kante (36, 37) des Rahmens (31) als Bezugspunkt für die Bestimmung der Position der Körper in Bezug auf die Detektoren dient.

## Claims

1. Method of calibrating an assembly for measuring the transverse thickness profile of a flat product, including a source (10) of radiation, placed on one side of the product (1), and a row (20) of elementary detectors (21) which are juxtaposed and aligned along the direction (P) of the profile to be measured and are placed on the other side of the product, in order to detect that part of the radiation not absorbed by the product, the method being of the type consisting in interposing, between the source (10) and the detectors (21), standard shims (33) and in determining the response of said detectors as a function of the characteristics of these shims, characterized in that:
- a set (32) of different unitary shims (33), of small dimensions, aligned along said direction, are moved, between the source and the detectors, along said direction (P), each shim having predetermined specific characteristics, this movement being performed so that, while the latter is proceeding, each shim intercepts the radiation picked up by each detector, and
- while it is moving, a plurality of readings of the signals (50) emitted by the detectors is taken so as to obtain, for each detector, a set of values of the signals representing the intensity of the radiation absorbed by each shim, both the speed of movement of the set of shims and the frequency of the readings being adjusted so that, for each detector, there is at least one reading of the signals relating to each shim, and
- the calibration curve of each detector is established on the basis of said values.

2. Method according to Claim 1, characterized in that, for each detector, a plurality of readings of the signals relating to the same shim is taken.

3. Method according to Claim 1, characterized in that the position of the set (32) of shims with respect to the row of detectors is determined, at the time of each reading, on the basis of the signals (50) read from the set of detectors.

4. Method according to Claim 3, characterized in that the position of the set of shims is determined by the position, within the row of detectors, of neighbouring detectors which, during a reading, supply highly differentiated signals resulting from an abrupt transition in the absorption of the radiation between a predefined element of the set of shims, or of a support (31) for this set, and the neighbourhood of this element.

5. Method according to Claim 4, characterized in that said abrupt transition is produced by the free edge (36, 37) of a frame (31) for supporting the shims (32) which strongly absorbs the radiation, whereas, beyond this edge, the radiation reaches the detectors in its entirety.

6. Method according to any one of the preceding claims, characterized in that, during each reading, only the signals which reach the detectors located, during this reading, facing the central part of the shims are employed.

7. Device for calibrating an assembly for measuring the thickness profile of flat products, which includes a source (10) of radiation and a row (20) of elementary detectors (21) which are juxtaposed and aligned along the direction (P) of the profile to be measured, both the source and the row of detectors being placed on either side of a zone (2) for passage of said product, characterized in that it includes a set (32) of shims (33) having different characteristics, these shims being aligned along said direction, a carriage (30) for supporting the shims, which is movable along this direction in order to move the set of shims into the passage zone so that each shim can intercept the radiation emitted by the source towards each detector, and means (22) for taking, while the carriage is moving, a plurality of readings of the signals emitted by the detectors so as to obtain, for each detector, a set of values of the signals representing the intensity of the radiation absorbed by each shim, and means (23) for determining the calibration curve of each sensor on the basis of these values.

8. Device according to Claim 7, characterized in that the shims are supported by the carriage by means of a frame (31) to which the shims are attached in a contiguous manner.

9. Device according to Claim 8, characterized in that the edge (36, 37) of the frame (31) serves as a reference for the determination of the position of the shims with respect to the detectors.
